# EUROPEAN PATENT APPLICATION

(11) **EP 4 772 785 A1**
(43) Date of publication of application: **08.07.2026**
(21) Application number: 25212623.0
(22) Date of filing: 31.10.2025
(51) Int. Cl.: F16L 55/027, F16L 55/054

(54) **PRESSURE DIFFUSER FOR USE WITH A FLUID SYSTEM**

(30) Priority: 07.01.2025 US 202519011919
(71) Applicant: The Boeing Company, Arlington, VA 22202 (US)
(72) Inventor: Cadiz, Dionel, Arlington, 22202 (US); Wallace, Jonathan Brian, Arlington, 22202 (US); Garon, David Charles, Arlington, 22202 (US)
(74) Representative: Witte, Weller & Partner Patentanwälte mbB

(57) **Abstract**

A pressure diffuser to accommodate changes in pressure of a fluid within a fluid supply. The pressure diffuser includes a housing with an interior space and with an inlet and an outlet. A diverting member is positioned within the interior space. The diverting member is configured to divert the fluid within the interior space away from the outlet. An elastic membrane is positioned radially within the interior space between the housing and the diverting member. The elastic membrane is configured to receive the fluid from the diverting member and to expand and contract dependent on a pressure of the fluid.

## Description

### TECHNOLOGICAL FIELD

The present disclosure relates generally to the field of fluid systems and, more specifically, to pressure diffusers configured to be connected to a fluid system to accommodate high fluid pressure loads.

### BACKGROUND

There are a wide variety of contexts of fluid systems that include a fluid that moves through a fluid line. Examples include but are not limited to fuel moving through a fuel line in a vehicle, water moving through an irrigation line, and a fluid chemical composition moving through a supply line in an industrial environment.

The fluid can undergo changes in pressure as it moves through the lines. The pressure changes can be caused by various aspects such as opening and closing valves that control the flow of the fluid through the fluid lines. In one example, the fluid experiences a water hammer effect that includes a pressure surge due to the fluid being suddenly stopped or changed direction in the fluid lines. These changes can cause the fluid to exert high pressure loads on the fluid system. In some examples, the pressures exceed the loads that the systems were designed to encounter.

The fluid systems should be constructed to accommodate the pressure changes of the fluid. The system should be designed to accommodate the pressure changes without adversely affecting the flow of fluid through the system. This enables the system to continue to supply the fluid as needed, such as moving fuel through a fuel line to supply an engine that is operating.

### SUMMARY

One aspect is directed to a pressure diffuser to accommodate changes in pressure of a fluid within a fluid supply. The pressure diffuser comprises a housing comprising an interior space with the housing further comprising a housing inlet and a housing outlet that are in communication with the interior space and configured to connect to the fluid supply. A diverting member is positioned within the interior space with the diverting member configured to divert the fluid within the interior space away from the outlet. An elastic membrane is positioned radially within the interior space between the housing and the diverting member with the elastic membrane configured to receive the fluid from the diverting member and to expand and contract dependent on a pressure of the fluid.

In another aspect, the diverting member comprises a body with a diverting member inlet positioned in proximity to the housing inlet and a diverting member outlet in proximity to the housing outlet, ports in the body between the diverting member inlet and the diverting member outlet, and wherein the diverting member is configured to divert the fluid that enters through the diverting member inlet through the ports in the body and into the elastic membrane.

In another aspect, the diverting member further comprises a wall positioned between the diverting member inlet and the diverting member outlet with the wall configured to block the flow of the fluid and to divert the fluid through the ports that are upstream from the wall.

In another aspect, a first portion of the ports are positioned upstream from the wall and a second portion of the ports are positioned downstream from the wall.

In another aspect, the housing and the diverting member are coaxially aligned.

In another aspect, a drain port extends through the housing at a point between the housing inlet and the housing outlet.

In another aspect, wherein the housing comprises a longitudinal axis that extends through the housing inlet and the housing outlet with the longitudinal axis being straight and configured to be aligned with a fluid flow direction.

**In** another aspect, the housing inlet and the housing outlet comprise fluid connection members to connect to fluid lines of the fluid supply.

One aspect is directed to a pressure diffuser to accommodate changes in pressure of a fluid within a fluid supply. The pressure diffuser comprises: a housing comprising an interior space, a housing inlet, and a housing outlet; a diverting member positioned within the interior space and comprising a body that forms a channel, a wall that extends across the channel, and ports that extend through the body with one or more of the ports positioned upstream from the wall and one or more of the ports positioned downstream from the wall; and an elastic membrane that extends around the ports in the diverting member with the elastic membrane contained within the interior space of the housing and configured to expand and contract based on a pressure of the fluid that enters into the housing.

In another aspect, the housing and the diverting member each comprise tubular shapes that are coaxially aligned.

In another aspect, the wall extends completely across the channel and completely blocks the flow of the fluid along the channel.

In another aspect, a drain port extends through the housing with the drain port positioned between the housing inlet and the housing outlet.

In another aspect, the elastic membrane is located away from the channel to enable the fluid to enter into and exit from the diverting member.

In another aspect, the diverting member and the elastic membrane are each fully contained within the housing.

One aspect is directed to a method of diffusing pressure of a fluid that is moving within a fluid system. The method comprises: receiving the fluid from the fluid system into a housing and into a channel of a diverting member that is positioned within the housing; blocking a flow of the fluid along the channel at a wall and diverting the fluid through first ports in the diverting member that are upstream from the wall; receiving the fluid from the first ports into an elastic membrane and expanding the elastic membrane and decreasing the pressure of the fluid; directing the fluid from the elastic membrane through second ports in the diverting member that are downstream from the wall; and moving the fluid through the diverting member and the housing and back into the fluid system.

In another aspect, the method further comprises receiving the fluid into the elastic membrane and expanding the elastic membrane and contacting the elastic membrane against the housing.

In another aspect, the method further comprises expanding the elastic membrane and containing the elastic membrane within an interior of housing.

In another aspect, the method further comprises connecting the housing to the fluid system and aligning a longitudinal axis of the housing with a direction of fluid flow along the fluid system.

In another aspect, the method further comprises: directing a portion of the fluid that leaks from the elastic membrane to a drain port in the housing; detecting the fluid at the drain port; and in response to detecting the fluid, determining a leak in the elastic membrane.

In another aspect, the method further comprises directing the fluid in a first direction through an upstream portion of the channel and then directing the fluid in a second transverse direction through the first ports.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is an isometric view of a fluid system of an aircraft that moves fuel from the fuel tanks to the engines.
Figure 2 is a schematic diagram of a fluid system that includes pressure diffusers mounted along the fluid lines.
Figure 3 is a schematic diagram of a pressure diffuser.
Figure 4 is a schematic diagram of a pressure diffuser.
Figure 5 is a flowchart diagram of a method of diffusing pressure of a fluid that is moving within a fluid system.

### DETAILED DESCRIPTION

The present disclosure is directed to a pressure diffuser configured to be connected to a fluid system. The pressure diffuser is configured to enable the fluid system to take higher pressures without causing damage. The pressure diffuser can be used in a variety of different fluid systems.

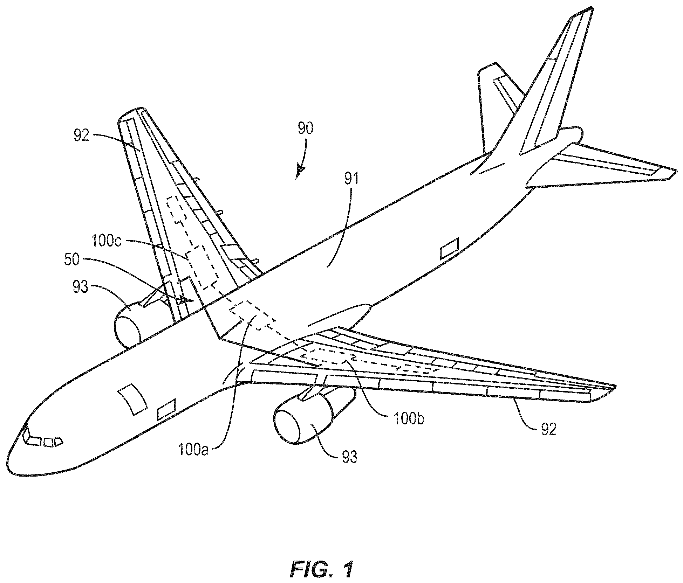

Figure 1 illustrates one example of a fluid system 50. In this example, the fluid system 50 is within an aircraft 90 and configured to supply fuel from fuel tanks mounted in the fuselage 91 and wings 92 to the engines 93. In this example, the fuel tanks 100 are aligned with the wings 92 and include a center wing tank 100a partially contained within the fuselage 91 and a pair of main wing fuel tanks 100b, 100c located in the wings 92.

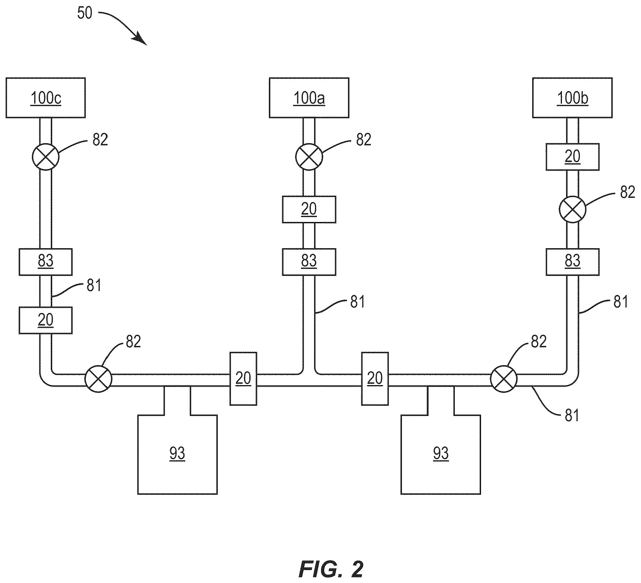

Figure 2 schematically illustrates the fluid system 50 of the aircraft 90. The fuel is stored in the fuel tanks 100. Fuel lines 81 extend from the tanks 100 to deliver the fuel to the engines 93. In some examples, the fluid system 50 is also configured to enable the transfer of fuel between the different fuel tanks 100. One or more valves 82 and fuel pumps 83 are controlled to direct the flow of fuel. In some examples, filters (not illustrated) are located along the fuel lines 81 to remove contaminants. The fluid system 50 is configured to enable pilots to select which fuel tanks 100 to use and the amount of fuel to deliver to the engines 93 depending on flight conditions.

One or more pressure diffusers 20 are positioned within the fluid system 50 to accommodate changes in the fluid pressure. In some examples, the changes in fluid pressure are transient and caused by one or more conditions of the fluid system 50 such as the opening or closing of valves 82 and changing the direction of fluid flow such as within corners/bends of the fuel lines 81. The pressure diffusers 20 can be positioned at different locations along the fuel lines 81. Figure 2 illustrates an example with the pressure diffusers 20 positioned each of the fuel lines 81 that extend from the fuel tanks 100a, 100b, 100c, and along a manifold that leads to the engines 93.

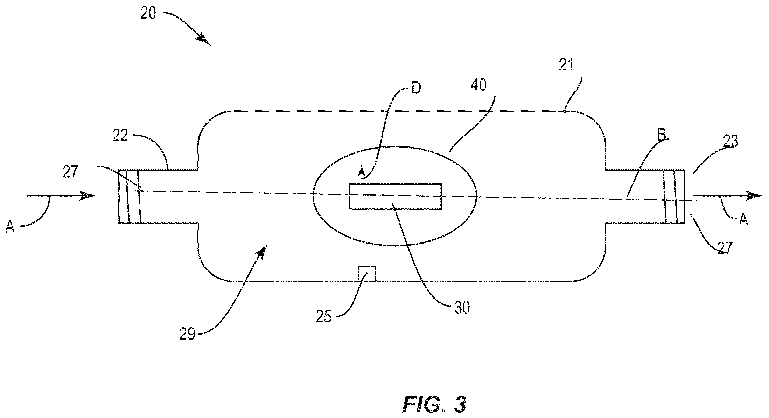

Figure 3 schematically illustrates a pressure diffuser 20 configured to be mounted to the fluid system 50. In some examples, the pressure diffuser 20 is configured to be connected to an existing fluid system 50, such as during a retrofit upgrade of an existing aircraft 90. In other examples, the pressure diffuser 20 can be incorporated into the fluid system 50 during initial manufacturing of the aircraft 90.

The pressure diffuser 20 includes a housing 21 configured to be connected to the fluid system 50. The housing 21 is shaped and sized to extend around and form an interior space 29. The housing 21 captures fluid that could leak from the interior components of the pressure diffuser 20 that are positioned in the interior space 29. The housing 21 includes an inlet 22 through which the fluid enters and an outlet 23 through which the fluid exits. The inlet 22 and outlet 23 are configured to be connected to fuel lines 81 of the fluid system 50. In some examples, these include fluid connection members 27 that enable for connection of the pressure diffuser 20 to various types of plumbing couplings that are mounted on the fuel lines 81. Examples of fluid connection members 27 include but are not limited to threads and clamps.

In some examples as illustrated in Figure 3, the housing 21 has a longitudinal axis B that extends through the inlet 22 and the outlet 23. The pressure diffuser 20 is configured to be connected in-line with the flow of fluid through the fluid system 50 as indicated by arrows A. The pressure diffuser 20 is configured to be connected in-line with the longitudinal axis B aligned with the with the fluid flow direction A.

A diverting member 30 is positioned within the interior space 29. The diverting member 30 receives the fluid and diverts the direction flow shown by arrow D away from the outlet 23 of the housing 21. In some examples, the diverting direction D is perpendicular to the longitudinal axis B of the housing 21.

An elastic membrane 40 is positioned within the interior space 29 of the housing 21 at the diverting member 30. The elastic membrane 40 receives the fluid that is diverted by the diverting member 30. The elastic membrane 40 is configured to expand and contract based on the pressure of the fuel that enters the pressure diffuser 20. In some examples, the extent of expansion of the pressure diffuser 20 is limited by the size of the interior space 29 of the outer housing 21 as the elastic membrane 40 contacts against the housing 21 and is prevented from further expansion in size.

A drain port 25 extends through the housing 21. Fluid that leaks from the elastic membrane 40 exits the housing 21 through the drain port 25. In some examples, the drain port 25 is positioned vertically below the elastic membrane 40 to enable the leaked fluid to move by gravity to the drain port 25. In some examples, a sensor (not illustrated) is positioned at the port to detect the leak.

In use, fuel enters the pressure diffuser 20 through the inlet 22. The fuel is diverted by the diverting member 30 into the elastic membrane 40 and then eventually exits through the outlet 23. When there is an increase in the pressure of the fuel within the pressure diffuser 20, the elastic membrane 40 expands to accommodate the increase. This expansion enables the pressure diffuser 20 to reduce the overall pressure of the fuel.

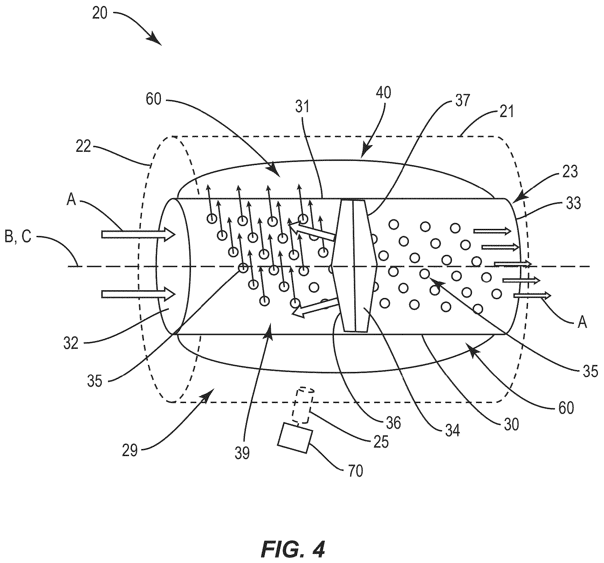

Figure 4 illustrates an example of a pressure diffuser 20 configured to be connected to a fluid system 50. The pressure diffuser 20 includes a housing 21 with an inlet 22 and an outlet 23 that are each configured to be connected to the fuel line. The connection enables the pressure diffuser 20 to be positioned in-line with the flow of fluid (arrows A) that is moving along the fuel line. The pressure diffuser 20 also connects in a manner that prevents air ingestion into the fuel line and prevents fluid from leaking out of the fuel line.

The pressure diffuser 20 includes an elastic membrane 40 positioned within the interior space 29 of the 21. The elastic membrane 40 is elastic to expand and contract due to changes in the fuel pressure. The pressure diffuser 20 can be constructed from a variety of materials including but not limited to nitrile buna rubber and ethylene propylene diene monomer rubber (EPDM rubber). In some examples as illustrated in Figure 4, the elastic membrane 40 includes a substantially elongated shape and is sized to fit within the interior space 29 to enable the housing 21 to capture fuel that could leak.

The diverting member 30 is positioned within the elastic membrane 40. The diverting member 30 includes a body 31 that forms a channel having an inlet 32 and an outlet 33. The body 31 is constructed from a material that prevents fluid passage with examples including but not limited to various plastics, metals, and various composites. In one example as illustrated in Figure 4, the body 31 has a substantially cylindrical shape with an elongated longitudinal axis C that extends through the inlet 32 and outlet 33. The diverting member 30 is positioned relative to the elastic membrane 40 for the inlet 32 to be exposed to enable the fluid to enter into the channel 39. The outlet 33 is also exposed from the elastic membrane 40 to enable the fluid to exit.

In some examples as illustrated in Figure 4, both of the housing 21 and the body 31 of the diverting member 30 have substantially cylindrical shapes. Housing 21 has a longitudinal axis B and body 31 has a longitudinal axis C that are coaxially aligned. In some examples, all of the fluid that enters into the housing 21 flows into the body 31.

The diverting member 30 includes a wall 34 that extends across the channel 39 and ports 35 that extend through the body 31. A first number of the ports 35 are positioned upstream from the wall 34 (i.e., between the inlet 32 and the wall 34). A second number of the ports 35 are positioned downstream from the wall 34 (i.e., between the wall 34 and the outlet 33).

The wall 34 extends across the channel 39 and causes the fluid to move through the upstream ports 35. In some examples, the wall 34 completely closes the channel 39 causing all of the fluid to exit through the upstream ports 35. In other examples, the wall 34 does not completely block the channel allows a first portion of the fuel to pass while diverting a remaining second portion of the fuel to move through the upstream ports 35.

The wall 34 includes a front face 36 that faces upstream and a rear face 37 that faces downstream. In some examples, one or both of the faces 36, 37 are substantially flat. In other examples as illustrated in Figure 4, one or both of the faces 36, 37 have an angled surface to direct the fluid towards the ports in the body 31. In some examples, one or both faces 36, 37 have a peak along the longitudinal axis C and angle away from the peak towards the walls of the channel 39.

The upstream ports 35 enable the fluid to exit the body 31 of the diverting member 30 and enter into the elastic membrane 40. The entering fluid at an elevated pressure causes the elastic membrane 40 to expand. This expansion provides additional space for the fluid thereby lowering the pressure. The extent of expansion is dependent upon the fluid pressure with a higher pressure resulting in additional expansion than a lower pressure. The positioning of the elastic membrane 40 in the space 60 between the housing 21 and body 31 controls the extent of expansion and contraction. In some examples during expansion, the elastic membrane 40 contacts against the housing 21 which limits the extent of expansion. As the pressure is reduced, the elastic membrane 40 contracts inward towards the body 31. In some examples, the space 60 extends completely around the body 31. Other examples include the space 60 being limited to just one or more angular sections around the body 31.

The fluid in the elastic membrane 40 than moves through the downstream ports 35 and reenters the channel 39 downstream from the wall 34. The fluid than moves through the diverting member 30 and housing 21 and reenters the fuel line 81.

The number and positioning of the upstream and downstream ports 35 can vary. In some examples, the ports 35 are positioned completely around the perimeter of the channel 39. In other examples, the ports 35 are positioned at limited angular locations around the perimeter of the channel 39 (e.g., just along a bottom of the body 31).

A drain port 25 extends through the housing 21. The drain port 25 is positioned to receive fluid that has leaked from the elastic membrane 40. In some examples, the drain port 25 is positioned vertically below the elastic membrane 40 to enable gravity to move the leaked fluid along the interior space 29 of the housing 21 and to the drain port 25. In some examples, a single drain port 25 is included in the pressure diffuser 20. Other examples include two or more different drain ports 25 that are positioned at different locations along the housing 21.

In some examples, a sensor 70 is positioned at the drain port 25 to detect the fuel. Examples of sensors 70 include but are not limited to a conductivity sensor, an optical sensor, ultrasonic sensor, and infrared sensor. In some examples, the sensor 70 is a leak detector.

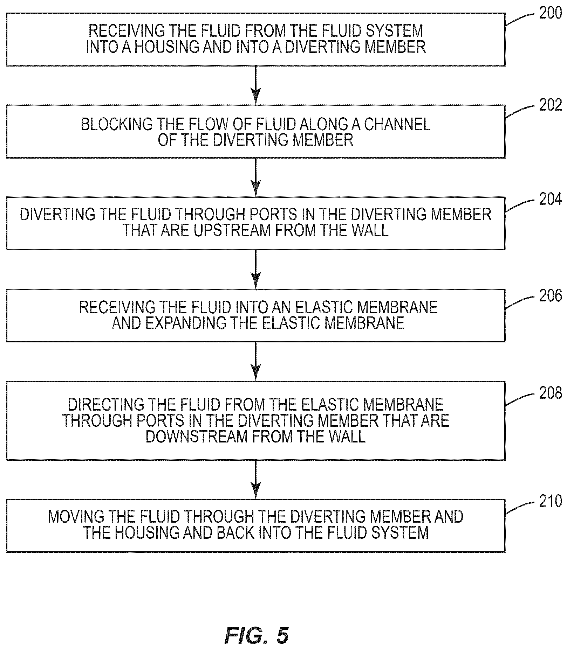

Figure 5 illustrates a method of diffusing pressure of a fluid that is moving within a fluid system. The method includes receiving the fluid from the fluid system 50 into a housing 21 and into a channel 39 of a diverting member 30 that is positioned within the housing 21 (block 200). The flow of fluid is blocked along the channel 39 at a wall 34 (block 202). The block fluid is diverted through ports 35 in the diverting member 30 that are upstream from the wall 34 (block 204). The fluid that moves through the ports 35 is received into an elastic membrane 40 thereby expanding the elastic membrane 40 and decreasing the pressure of the fluid (block 206). The fluid is directed from the elastic membrane 40 through second ports 35 in the diverting member 30 that are downstream from the wall 34 (block 208). The fluid is moved through the diverting member 30 and the housing 21 and back into the fluid system 50 (block 210).

Further, the current disclosure comprises the following clauses:
Clause 1. A pressure diffuser to accommodate changes in pressure of a fluid within a fluid supply, the pressure diffuser comprising:
   a housing comprising an interior space, the housing further comprising a housing inlet and a housing outlet that are in communication with the interior space and configured to connect to the fluid supply;
   a diverting member positioned within the interior space, the diverting member configured to divert the fluid within the interior space away from the outlet; and
   an elastic membrane positioned radially within the interior space between the housing and the diverting member, the elastic membrane configured to receive the fluid from the diverting member and to expand and contract dependent on a pressure of the fluid.
Clause 2. The pressure diffuser of clause 1, wherein the diverting member comprises:
   a body with a diverting member inlet positioned in proximity to the housing inlet and a diverting member outlet in proximity to the housing outlet;
   ports in the body between the diverting member inlet and the diverting member outlet; and
   wherein the diverting member is configured to divert the fluid that enters through the diverting member inlet through the ports in the body and into the elastic membrane.
Clause 3. The pressure diffuser of clause 2, wherein the diverting member further comprises a wall positioned between the diverting member inlet and the diverting member outlet with the wall configured to block a flow of the fluid and to divert the fluid through the ports that are upstream from the wall. Clause 4. The pressure diffuser of clause 3, wherein a first portion of the ports are positioned upstream from the wall and a second portion of the ports are positioned downstream from the wall.
Clause 5. The pressure diffuser of any of clauses 1 to 4, wherein the housing and the diverting member are coaxially aligned.
Clause 6. The pressure diffuser of any of clauses 1 to 5, further comprising a drain port that extends through the housing at a point between the housing inlet and the housing outlet.
Clause 7. The pressure diffuser of any of clauses 1 to 6, wherein the housing comprises a longitudinal axis that extends through the housing inlet and the housing outlet, wherein the longitudinal axis is straight and configured to be aligned with a fluid flow direction.
Clause 8. The pressure diffuser of any of clauses 1 to 7, wherein the housing inlet and the housing outlet comprise fluid connection members to connect to fluid lines of the fluid supply.
Clause 9. A pressure diffuser to accommodate changes in pressure of a fluid within a fluid supply, the pressure diffuser comprising:
   a housing comprising:
      an interior space;
      a housing inlet;
      a housing outlet;
   a diverting member positioned within the interior space, the diverting member comprising:
      a body that forms a channel;
      a wall that extends across the channel;
      ports that extend through the body with one or more of the ports positioned upstream from the wall and one or more of the ports positioned downstream from the wall; and
   an elastic membrane that extends around the ports in the diverting member, the elastic membrane contained within the interior space of the housing and configured to expand and contract based on a pressure of the fluid that enters into the housing.
Clause 10. The pressure diffuser of clause 9, wherein the housing and the diverting member each comprise tubular shapes that are coaxially aligned.
Clause 11. The pressure diffuser of clause 9 or 10, wherein the wall extends completely across the channel and completely blocks a flow of the fluid along the channel.
Clause 12. The pressure diffuser of any of clauses 9 to 11, further comprising a drain port that extends through the housing, the drain port positioned between the housing inlet and the housing outlet.
Clause 13. The pressure diffuser of any of clauses 9 to 12, wherein the elastic membrane is located away from the channel to enable the fluid to enter into and exit from the diverting member.
Clause 14. The pressure diffuser of any of clauses 9 to 13, wherein the diverting member and the elastic membrane are each fully contained within the housing.
Clause 15. A method of diffusing pressure of a fluid that is moving within a fluid system, the method comprising:
   receiving the fluid from the fluid system into a housing and into a channel of a diverting member that is positioned within the housing;
   blocking a flow of the fluid along the channel at a wall and diverting the fluid through first ports in the diverting member that are upstream from the wall;
   receiving the fluid from the first ports into an elastic membrane and expanding the elastic membrane and decreasing the pressure of the fluid;
   directing the fluid from the elastic membrane through second ports in the diverting member that are downstream from the wall; and
   moving the fluid through the diverting member and the housing and back into the fluid system.
Clause 16. The method of clause 15, further comprising receiving the fluid into the elastic membrane and expanding the elastic membrane and contacting the elastic membrane against the housing.
Clause 17. The method of clause 16, further comprising expanding the elastic membrane and containing the elastic membrane within an interior of housing.
Clause 18. The method of any of clauses 15 to 17, further comprising connecting the housing to the fluid system and aligning a longitudinal axis of the housing with a direction of fluid flow along the fluid system.
Clause 19. The method of any of clauses 15 to 18, further comprising:
   directing a portion of the fluid that leaks from the elastic membrane to a drain port in the housing;
   detecting the fluid at the drain port; and
   in response to detecting the fluid, determining a leak in the elastic membrane.
Clause 20. The method of any of clauses 15 to 19, further comprising directing the fluid in a first direction through an upstream portion of the channel and then directing the fluid in a second transverse direction through the first ports.

By the term "substantially" with reference to amounts or measurement values, it is meant that the recited characteristic, parameter, or value need not be achieved exactly. Rather, deviations or variations, including, for example, tolerances, measurement error, measurement accuracy limitations, and other factors known to those skilled in the art, may occur in amounts that do not preclude the effect that the characteristic was intended to provide.

Spatially relative terms such as "under", "below", "lower", "over", "upper", and the like, are used for ease of description to explain the positioning of one element relative to a second element. These terms are intended to encompass different orientations of the device in addition to different orientations than those depicted in the figures. Further, terms such as "first", "second", and the like, are also used to describe various elements, regions, sections, etc. and are also not intended to be limiting. Like terms refer to like elements throughout the description.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A pressure diffuser to accommodate changes in pressure of a fluid within a fluid supply, the pressure diffuser comprising:
a housing (21) comprising an interior space (29), the housing (21) further comprising a housing inlet (22) and a housing outlet (23) that are in communication with the interior space (29) and configured to connect to the fluid supply;
a diverting member (30) positioned within the interior space (29), the diverting member (30) configured to divert the fluid within the interior space (29) away from the outlet (23); and
an elastic membrane (40) positioned radially within the interior space (29) between the housing (21) and the diverting member (30), the elastic membrane (40) configured to receive the fluid from the diverting member and to expand and contract dependent on a pressure of the fluid.

2. The pressure diffuser of claim 1, wherein the diverting member (30) comprises:
a body (31) with a diverting member inlet (32) positioned in proximity to the housing inlet (22) and a diverting member outlet (33) in proximity to the housing outlet (23);
ports (35) in the body (31) between the diverting member inlet (32) and the diverting member outlet (33); and
wherein the diverting member (30) is configured to divert the fluid that enters through the diverting member inlet (32) through the ports (35) in the body (31) and into the elastic membrane (40).

3. The pressure diffuser of claim 2, wherein the diverting member (30) further comprises a wall (34) positioned between the diverting member inlet (32) and the diverting member outlet (33) with the wall (34) configured to block a flow of the fluid and to divert the fluid through the ports (35) that are upstream from the wall (34).

4. The pressure diffuser of claim 3, wherein a first portion of the ports (35) are positioned upstream from the wall (34) and a second portion of the ports (35) are positioned downstream from the wall (34).

5. The pressure diffuser of any of claims 1 to 4, wherein the housing (21) and the diverting member (30) are coaxially aligned.

6. The pressure diffuser of any of claims 1 to 5, further comprising a drain port (25) that extends through the housing (21) at a point between the housing inlet (22) and the housing outlet (23).

7. The pressure diffuser of any of claims 1 to 6, wherein the housing (21) comprises a longitudinal axis that extends through the housing inlet (22) and the housing outlet (23), wherein the longitudinal axis is straight and configured to be aligned with a fluid flow direction.

8. The pressure diffuser of any of claims 1 to 7, wherein the housing inlet (22) and the housing outlet (23) comprise fluid connection members (27) to connect to fluid lines of the fluid supply.

9. A pressure diffuser to accommodate changes in pressure of a fluid within a fluid supply, the pressure diffuser comprising:
a housing (21) comprising:
an interior space (29);
a housing inlet (22);
a housing outlet (23);
a diverting member (30) positioned within the interior space (29), the diverting member (30) comprising:
a body (31) that forms a channel (39);
a wall (34) that extends across the channel (39);
ports (35) that extend through the body (31) with one or more of the ports (35) positioned upstream from the wall (34) and one or more of the ports positioned downstream from the wall (34); and
an elastic membrane (40) that extends around the ports (35) in the diverting member (30), the elastic membrane (40) contained within the interior space (29) of the housing (21) and configured to expand and contract based on a pressure of the fluid that enters into the housing (21).

10. The pressure diffuser of claim 9, wherein the housing and the diverting member each comprise tubular shapes that are coaxially aligned.

11. The pressure diffuser of claim 9 or 10, wherein the wall extends completely across the channel and completely blocks a flow of the fluid along the channel.

12. The pressure diffuser of any of claims 9 to 11, further comprising a drain port that extends through the housing, the drain port positioned between the housing inlet and the housing outlet.

13. The pressure diffuser of any of claims 9 to 12, wherein the elastic membrane is located away from the channel to enable the fluid to enter into and exit from the diverting member.

14. The pressure diffuser of any of claims 9 to 13, wherein the diverting member and the elastic membrane are each fully contained within the housing.

15. A method of diffusing pressure of a fluid that is moving within a fluid system, the method comprising:
receiving the fluid from the fluid system into a housing (21) and into a channel (39) of a diverting member (30) that is positioned within the housing (21);
blocking a flow of the fluid along the channel (39) at a wall (34) and diverting the fluid through first ports (35) in the diverting member (30) that are upstream from the wall (34);
receiving the fluid from the first ports (35) into an elastic membrane (40) and expanding the elastic membrane (40) and decreasing the pressure of the fluid;
directing the fluid from the elastic membrane (40) through second ports (35) in the diverting member (30) that are downstream from the wall (34); and
moving the fluid through the diverting member (30) and the housing (21) and back into the fluid system.
